# EUROPEAN PATENT SPECIFICATION

(11) **EP 1 613 543 B1**
(45) Date of publication and mention of the grant of the patent: **25.07.2007**
(21) Application number: 03748048.0
(22) Date of filing: 15.09.2003
(51) Int. Cl.: B65G 17/32, B65B 3/00, B65B 55/02, B65G 17/46, B65B 31/08

(54) **ARTICLE HOLDING MEANS AND CONVEYOR SYSTEM**
ARTIKELHALTEVORRICHTUNG UND FÖRDERSYSTEM
MOYENS DE RETENUE ET SYSTEME DE TRANSPORT

(30) Priority: 17.09.2002 GB 0221510; 17.09.2002 GB 0221511
(43) Date of publication of application: 11.01.2006
(73) Proprietor: GlaxoSmithKline Biologicals s.a., 1330 Rixensart (BE)
(72) Inventor: THILLY, Jacques, GlaxoSmithKline Biolog. SA., B-1330 Rixensart (BE); VANDECASSERIE, Christian. GlaxoSmithKline Bio. SA., B-1330 Rixensart (BE)
(74) Representative: Walker, Ralph Francis
(86) International application number: PCT/EP2003/010349
(87) International publication number: WO 2004/026735

(56) References cited:
- EP-A- 0 096 336
- EP-A- 0 213 690
- WO-A-02/064439
- DE-A- 19 916 662
- US-A- 2 503 147
- US-A- 3 092 237
- US-A- 3 881 763
- US-A- 5 558 200
- US-A- 6 098 676
- US-B1- 6 360 794

## Description

This invention relates to a conveyor system, particularly to a conveyor system for conveying pharmaceutical vials, especially for conveying such vials past one or more processing station at which one or more operation such as filling or sealing may be performed. In particular the invention relates to holding means for securely holding articles onto such a conveyor.

Conveyor systems such as endless belts or chains are well known. In the pharmaceutical industry vials or other articles are commonly transported by a conveyor adjacent to processing stations which comprise apparatus for performing a process, e.g. filling or sealing the vial etc. Often it is necessary to perform such processes on sterile vials and in a sterile environment. A sterile environment is frequently provided by means of a downward laminar flow of purified air. EP-A-0 096 336 and US-A-6,098,676 disclose filling systems in which such a flow of purified air is used. For such purposes in the pharmaceutical industry a conveyor must comply with Good Manufacturing Practice ("GMP") and corresponding FDA requirements. These call for a conveyor system that minimises the possibility of contamination, can easily be cleaned, and can easily be swept by such a laminar flow.

A problem with known laminar flow systems is that often the components of processing stations are often angular in shape and/or have numerous recesses, corners etc. which can cause turbulence in the laminar flow and are not easily swept by such a laminar flow, and sterility can be compromised for example if micro-organisms are able to reside in such recesses etc. Additionally the laminar flow can be disrupted by turbulence as the air flows over the processing station. This can cause the processing station to fail to comply with Good Manufacturing Practice ("GMP").

A particular problem associated with such a laminar flow over a conveyor in a poorly designed system is that sterile air, having flowed past an upstream part of the conveyor or a vial on the conveyor, may "rebound" from a downstream surface and carry contamination upstream. It is also desirable, but a complicating problem, to ensure that as far as possible handling machinery e.g. parts of conveyors is kept downstream of sterile articles to reduce the possibility of contamination. Such a conveyor system must also satisfy the general requirement of holding articles sufficiently securely to enable safe transport of the articles, convenient processing at the processing stations, and easy release when the operations are completed.

A filling and sealing process is disclosed in US-A-5,641,004 and WO-A-02/064439 in which vials are provided with respectively a part of their wall or their closure made of a heat-fusible material which can be punctured by passing a hollow filling needle through the wall or closure, a material introduced into the vial via the needle, the needle withdrawn to leave a small residual puncture hole, and this puncture hole then sealed using a source of heat particularly a laser beam. WO-A-04/018317 discloses vials adapted to such a process, and provided with a ring-shaped stand or carrier (feature 50) having an inner perimeter, an outer perimeter, an upper surface and a lower surface. It is desirable in such a process that the vial is held by a holding means during this process at a place distant from the upper closure of the vial, to avoid interference of the holding means with the filling and heat sealing process. Holding means suitable for holding containers are known in the art, for example US-A-3,881,763 and US-A-5,558,200 disclose holders by which necked containers may be hung. EP-A-0 213 690 discloses holders which are vented to avoid the build up of static electricity. US-A-3,092,237 discloses a conveyor system having holders for holding articles on the conveyor and conveying them to processing stations. DE-A-199 16 662 discloses a conveyor system for pharmaceutical ampules, having holders and centering systems.

Filling machines which fill a container using a filling needle passed through a closure are also known. US-A-2,503,147 and US 6,360,794 disclose machines in which during withdrawal of the filling needle the container is held down by a restraining member acting upon the closure.

It is an object of this invention to provide a conveyor system that meets these requirements, in particular aiming to provide means to hold vials of the above mentioned type on a conveyor system for performing the above-mentioned filling and sealing process, and to improve the laminar flow of purified air through the system.

This invention provides a conveyor system for the transport of vials having a closure made of a heat-fusible material and an opposite bottom, provided with a processing station to perform a process in which the vial with its closure made of a heat- fusible puncturable material is punctured by passing a hollow filling needle through the closure, a material introduced into the vial via the needle and the needle then withdrawn, provided with means to resist the upward force of withdrawing the filling needle, characterised in that said means comprise a means which holds the vial adjacent to the bottom of the vial.

The holding means may comprise;
a base suitable for a downward facing surface of a pharmaceutical vial, either empty e.g. for filling, or filled e.g. for sealing, held directly by the holding means of the invention, or preferably carried in a carrier to sit upon;
a grip part positioned relatively upwardly of the base and suitable to bear on an upward facing surface of the vial or a combination of a vial and carrier;
the base and/or grip part being moveable so that the vial or a combination may be positioned between the base and the grip part, and the base and grip part may then be brought closer together to grip the vial or a combination between them, and subsequently moved further apart to release the vial or a combination.

The holding means of the invention particularly addresses the problem of holding vials onto the conveyor for the above-mentioned filling and sealing process, particularly because the withdrawing of the needle causes an upward pulling force which tends to undesirably lift the vials off the conveyor. By bearing on the upward facing surface the grip part resists this force.

Preferably the vial is held in a carrier, and in a preferred embodiment the holding means comprises;
a base having an upper part able to mate against a downward facing surface of the carrier,
and a grip part having a grip means able to mate against an upward facing surface of the carrier, the grip part being moveable relative to the base between upper and lower positions of the grip part, such that when the grip part is in its upper position there is a gap between the grip means and the upper part of the base into which gap at least part of the carrier may be placed, and when the grip part is in the lower position the grip means bears on the carrier and the downward facing surface of the carrier mates with the upper part of the base so that the carrier is held between the grip means and the base.

A suitable carrier may have a socket aperture in which the lower part of the vial body may sit, preferably seated securely therein by friction and/or resilience. Vials generally have a cylindrical body with a flat, rounded or profiled bottom. For example a suitable carrier may comprise a plastics material ring around such a socket aperture, and the bottom of the vial may sit in the aperture of such a ring. Such a carrier is preferably the above-mentioned ring-shaped stand, having an upward facing upper surface and a downward facing lower surface, the held article comprising the combination of a vial and a carrier, and the holding means is arranged to grip the vial carrier.

The downward facing surface may comprise the underside of such a vial, or the underside of a carrier, or the underside of a combination of vial and carrier. The upward facing surface may be an upward facing surface of a carrier in which a vial is carried. For example if the carrier has a socket aperture the upward facing surface may comprise the upward facing rim of the aperture or an upward facing surface adjacent to the rim of the aperture.

An advantage of carrying the vial in a carrier, particularly a carrier in which the lower part of the vial body sits, is that the holding means may hold the vial carrier adjacent to the base of the vial, thereby avoiding the positioning of any parts of the holding means near to the vial mouth or closure where a filling or sealing operation may be taking place. With the vial in an upright orientation this can reduce the risk of "rebound" of airflow from lower downstream parts toward upstream parts of the vial.

The upper part of the base may mate with any of the above mentioned downward facing surfaces of a vial, carrier or vial-carrier combination. For example the upper part of the base may be flat, but is preferably of an upwardly convex shape, e.g. domed or (frustro) conical, and the downward facing surface of the vial, carrier or vial-carrier combination, may be of a matching concave shape, such that the convex and concave surfaces mate. The mating of such convex and concave surfaces can help with positioning and stabilising a vial.

The article is preferably the vial disclosed in above-mentioned WO-A-04/018317, in combination with a ring-shaped stand. Such a combination comprises a vial with a lower part shaped to fit and be retained securely within the inner perimeter of the ring shaped stand, e.g. in a male plug- female socket relationship, and the stand has an outer perimeter which extends, in a direction perpendicular to the mouth-base axis direction of the vial retained therein beyond the outer diameter of the vial body, the stand having an upward-facing upper surface and a downward-facing lower surface, which are preferably substantially flat and parallel. The stand may be positioned with its upper and lower surfaces between the base and the grip part and the base and grip part may then be brought closer together to grip the stand between them.

A preferred form of grip part comprises an up-down extending shaft having a grip means adjacent the upper end of the shaft.

A preferred grip means comprises a grip arm connected e.g. integrally formed with the shaft, e.g. at an end thereof with the upper end of the shaft, and extending in a direction transverse to the shaft up-down direction, preferably perpendicular to this direction, to an opposite end of the grip arm remote from the shaft, the grip arm being able to bear upon the article. Preferably the grip means comprises two such grip arms, between which the article may fit, with both arms extending in the transverse direction.

In one embodiment two such grip arms may extend in the transverse direction parallel to each other, such that in plan as viewed downwardly the two grip arms and their connection with the shaft define a general "U" shape such that the article or part thereof can fit securely into the bite of the "U". Suitably the connection of two such arms to the shaft is at the centre of the bend of the "U". In this embodiment the grip arms may be parallel to the direction of conveying motion.

In another embodiment two such grip arms may extend in the transverse direction toward each other with their opposite ends aligned toward each other and defining a gap between them in which the article may fit. For example two such arms may extend integrally in opposite transverse directions from the shaft and may loop around toward each other to form a generally "C" shaped loop, the bite of the "C" comprising the gap. In this embodiment the grip arms may be transverse to the direction of conveying motion, providing the advantage that the article may be withdrawn from a position between the two grip arms in two directions, i.e. relative to the plane of the "C" upwards and downwards.

For example with the above-mentioned combination of a vial and its carrier, the vial may fit in the gap between the grip arms, whilst the arms themselves bear upon the upper surface of the carrier.

The grip part, especially when this comprises one or more grip arm, preferably also comprises a support for the vial or combination with a carrier, which may be lower down on the grip part, e.g. on the shaft, than the grip arm(s). Such a support can fit underneath the vial or combination and support it whilst the grip part is in its upper position. A preferred construction comprises one or more support arm toward the upper end of the shaft and that extends transverse to, preferably perpendicular to, the up-down direction of the shaft to a remote end of the support arm.

One embodiment of such a support arm is provided by a shaft and support arm in the form of a "T", the shaft comprising the downward stem of the "T" and the horizontal bar of the "T" comprising the support arm. The one or more grip arm, e.g. two grip arms in a "U" plan, may be connected via such a support arm to the shaft.

Another embodiment of such a support arm is provided by two support arms with a linker, the arms and linker being of a generally "H" shape viewed in plan, the support arms being the uprights of the "H", the linker being connected to the shaft.

Preferably the base includes a guide to support and guide the grip part in its upward and downward movement between upper and lower positions. Such a guide may comprise a channel, e.g. a tubular channel, extending in the up-down direction which can receive the shaft of an above-described grip part and within which the shaft is slideably moveable up and down.

Preferably the grip part is biased toward its lower position so as to thereby apply a suitable gripping force to articles on the conveyor. This may be achieved by suitably weighting the grip part so that when mounted on the base part the weight of the grip part is sufficient to overcome any friction between the grip part and the guide. For example the shaft may have a weighted lower end. The grip part and base may include mutual locking means to allow the grip part to be releasably locked into its upper and/or lower position. The weight of the grip part may bear upon the vial or combination to provide a force such that the vial or combination is held between the grip means and the base.

The upper part of the base may have a receiving cavity for the support, and into which the support may be received when the grip part is in its lower position. For example such a receiving cavity may comprise a receiving slot to receive a support arm as described above. Suitably the up-down depth dimension of the receiving cavity is greater than the up-down thickness dimension of the support so that when the support is received in the receiving cavity with the grip part in its lower position the upper surface of the support is below the upper surface of the upper part of the base. This construction enables the grip part to grip the vial or combination between the grip part and the base, with the downward facing surface of the vial or combination resting on the base and not on the support.

Suitably the conveyor system of this invention comprises a plurality of the holding means, i.e. a plurality of bases and their associated grip parts, arranged in a row across the conveying direction, suitably perpendicularly across this direction.

In such a construction if the grip means comprises the above-mentioned "U" shaped arrangement of two grip arms, each arm, e.g. the limbs of the "U" and hence the open bite of the "U" should be aligned to point in the opposite direction to the conveying direction. Alternatively if the grip means comprises the above-mentioned "C" shaped loop of two grip arms, each arm should be aligned transverse to the conveying direction.

In such constructions a support arm is also preferably aligned parallel to the conveying direction. These alignments can assist in loading and unloading articles onto and off the conveyor system by a loader means as described below.

Suitably the conveyor system of this invention also comprises a loader means adjacent to the conveyor and arranged to load a vial or combination of vial and carrier into the holding means. Such a loader means may be configured to carry such a vial or combination into a position relative to the holding means when the grip means is in its upper position, such that the downward facing surface thereof the article is above the upper part of the base and the upward facing surface thereof is below the grip means. When the vial or combination is in this position the grip part can move into its lower position to grip the article. In the case of a vial, whether or not held by a carrier, the loader means may comprise jaws able to close around and grip a vial. Alternatively and preferably the loader means may comprise a fork able to fit around the vial and having an upward facing surface upon which a downward facing surface of the vial can sit. Such a downward facing surface may for example be the underside of a vial closure overhanging the neck or body of the vial, or the underside of a flange around the vial mouth.

Suitably the loader means may carry the vial in a direction parallel to the conveying direction. The loader means should be able to cause or allow a vial carried thereby to move downwardly, so as to enable the grip part to carry the vial downwardly, toward the lower position of the grip part, whilst the vial is still held by the loader means.

The loader means should be able to release a vial carried thereby when the holding means has securely gripped the vial. The loader means should be capable of motion between a position where the loader means can collect a vial to be carried to the conveyor, and a position where the vial can be received from the loader means by the holding means.

Suitably the conveyor system of this invention also comprises an unloader means adjacent to the conveyor and arranged to unload vial from the holding means, for example when one or more operation(s) upon the vial(s) is/are completed. Such a unloader means may be configured to receive a vial gripped by the holding means, after which the grip part may move into its upward position to release the vial from the holding means. In the case of a vial the unloader means may comprise jaws able to close around and grip the vial. Alternatively and preferably the loader means may comprise a fork able to fit around a vial carried by the conveyor and having an upward facing surface upon which a downward facing surface of the vial can sit. Such a downward facing surface may for example be the underside of a vial closure, or the underside of a flange around the vial mouth.

With such a construction, when the grip means comprises the above-mentioned "U" shaped arrangement of grip arms with the mouth of the "U" pointing opposite to the conveying direction, or the above-mentioned "C" shaped loop grip arms aligned transverse to conveying direction, when the vial is received by the unloader means the continued motion of the conveyor in the conveying direction can easily displace the article from the grip means by moving the article out of the bite of the "U" or the loop of the "C" when the grip part is in the upper position.

The unloader means should be capable of motion between a position where the loader means can collect a vial from the holding means, and a position where the vial can be transferred by the unloader means to a destination for the vial. The unloader means may for example have substantially the same construction and operation as the loader means, but be configured to operate in an opposite manner to the loader means.

One or more operation may be performed on vials carried by the conveyor system of this invention by means of one or more processing station arranged adjacent to the conveyor. Preferably such a processing station is positioned above the conveyor, and may have operative parts which move downward to process the vials. Examples of operations suitable for vials include filling, closing, heat sealing etc. and other operations conventional to pharmaceutical vials. To maintain sterility of the operating environment of the vials a downward laminar flow of purified air may be directed over articles carried on the conveyor.

The holding means of this invention is particularly suited to the above-mentioned filling and sealing process in which a vial with its closure made of a heat-fusible puncturable material is punctured by passing a hollow filling needle through the closure, a material introduced into the vial via the needle, the needle withdrawn to leave a small residual puncture hole in the closure, and this puncture hole then sealed using a source of heat particularly a laser beam.

Accordingly the conveyor system of this invention may be further provided with one or more processing station at which is situated a means for passing a hollow filling needle through the closure, introducing a material into the vial via the needle, and withdrawing the needle. Such a conveyor system may additionally comprise a processing station at which is situated a means for sealing the residual puncture left by the needle using a source of heat particularly a laser beam. Such vials as transported by this conveyor may have their lower part mounted in a carrier as described above.

The above-mentioned bias e.g. weight of the grip part, or the locking means helps to restrain a vial against any upward force experienced during the withdrawing of a filling needle from a vial closure. It is particularly preferred that adjacent the processing station at which the needle is withdrawn the conveyor is provided with a means to restrain the grip part from upward movement under the upward withdrawing force of the needle. Such a means may comprise an abutment part which abuts against the grip part in the event of any upward motion to restrain such upward movement.

In a filling and sealing process of the above-mentioned type in which a vial with its closure made of a heat- fusible puncturable material is punctured by passing a hollow filling needle through the closure, a material introduced into the vial via the needle, the needle withdrawn to leave a small residual puncture hole in the closure, and this puncture hole then sealed using a source of heat particularly a laser beam, a conveyor system to carry vials for the performance of this process of this process and being provided with means as described above e.g. the holding means etc, to resist the upward force of withdrawing the filling needle is an improvement and believed to be novel.

The conveyor system of this invention may be provided with a processing station to perform a process in which a vial with its closure made of a heat- fusible puncturable material is punctured by passing a hollow filling needle through the closure, a material introduced into the vial via the needle and the needle then withdrawn, provided with means to resist the upward force of withdrawing the filling needle.

When the conveyor system of this invention includes a processing station for performing an operation on an article in a laminar upstream to downstream direction flow of purified air, the processing station may comprise a processing apparatus for performing the operation upon the article, and there may be an aerodynamic shroud around at least part of the apparatus and positioned such that a leading surface of the aerodynamic shroud is upstream of the apparatus.

The upstream to downstream flow direction of purified air is preferably a downward flow of sterilised air, e.g. sterilised to Class 100 or better. The processing station of the invention is suitable for air flow rates as provided by conventional laminar flow generators. The processing station is therefore preferably located above the conveyor.

Parts of the conveyor system, i.e. the above described holding means and its components, should be made of materials suitable to comply with the requirements of GMP, for example stainless steel, and should be made to a design that minimises corners, crevices, cavities etc. in which might contamination might accumulate and which might disrupt a downward laminar flow of purified air around the conveyor system, such a flow being a commonly used means of ensuring sterility.

The invention will now be described by way of example only with reference to the following drawings.
Fig. 1 shows a perspective view of a base.
Fig. 2 shows a perspective view of a grip part.
Fig. 3 shows a perspective view of an alternative construction of grip part.
Fig. 4 shows a sectional view of a grip part engaged with a base.
Fig. 5 shows the operation of the holding means to hold a vial.
Fig. 6 shows a conveyor system incorporating the holding means of Figs. 1-5.
Fig. 7 shows the loading means of the conveyor of Fig. 6 in more detail
Fig. 8 shows an alternative conveyor system incorporating the holding means of Figs. 1-5.
Fig. 9 shows the sequence of operations as a vial passes processing stations on the conveyor.
Fig. 10 shows a schematic view from above of a processing station and a row of vials on a conveyor for processing

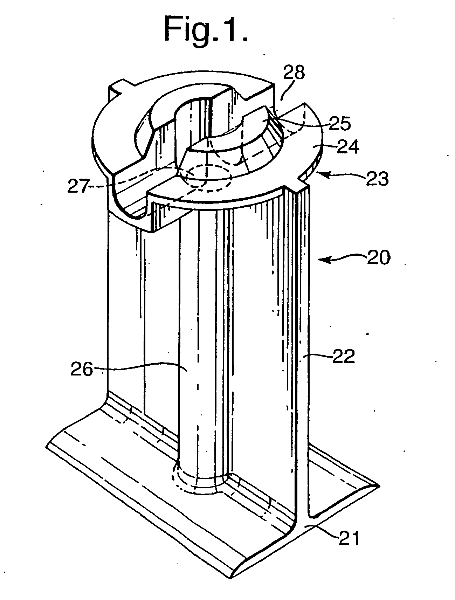

Referring to Figs. 1-10, the following parts are identified.
10 holding means
20 base
21 mounting plate
22 rib
23 upper part
24 flange
25 central convex portion
36 enlarged lower end of the shaft
26 tubular guide
27 upper end of guide
28 receiving cavity
30 grip part
31 shaft
32 grip means
33 grip arms
34 linking bend of the "U"
35 support arm
35A,35B limbs
36 enlargement of shaft
37 gap between grip arms
38 linker
40 pharmaceutical vial
41 closure
42 neck of vial
43 body of vial
44 bottom of vial
45 concave underside of vial
50 carrier
50A upper surface of carrier
50B lower surface of carrier
51 central aperture
60 conveyor system
61 continuous chains of links
61 A upper part of conveyor
61B lower part of conveyor
62 ends of links
63 guide wheel
64, 65 lift sections
70 loader means
71 fork
72 restraint
73 abutment parts
74 slot
80 processing station
81 processing station
90 unloader means
91 jaws of unloader means
100 laminar airflow
101 filling needle
102 medicament contents
103 focussed laser beam
110 aerodynamic shroud
120 vial filling apparatus
121 hollow filling needle
122 luer connector
123 flow conduit
130 conveyor line
150 supports

Referring to Figs 1 to 5, a holding means 10 suitable for the conveyor system of this invention is shown, dissembled, assembled and holding a vial 40. The holding means 10 comprises a base 20, and a grip part 30 described in more detail below.

The base 20, made integrally of stainless steel, comprises a mounting plate 21, suitable to engage with a conveyor system (not shown). The plate 21 is shown generalised and it will be understood that various types of known mounting will suit various known types of conveyor system. The plate 21 integrally extends upwardly as a rib 22, strengthening and stabilising the base 20.

The base 20 has an upper part 23, comprising a generally horizontally extending flange 24 with a generally flat upper surface, with a central convex portion 25 of an overall frustro-conical shape.

The grip part 30 is also integrally made of stainless steel and comprises an up-down extending cylindrical shaft 31, having at its upper end a grip means 32 generally. Grip means 32 comprises two grip arms 33 extending parallel to each other in a direction perpendicular to the up-down direction on opposite sides of the up-down axis direction of the shaft 31, so that in plan looking downwards the arms 33 are seen to be of a generally "U" shape linked at 34 being the bend of the "U".

The grip means 32 also includes a support arm 35, integrally connected to the upper end of the shaft 31, extending perpendicular to the shaft 31 and forming generally a "T" shape with the shaft 31, with the two limbs 35A, 35B of the "T" extending in a direction perpendicular to the up-down direction of the shaft 31, and parallel to the arms 33. In the construction shown the support arm 35 is lower down than the arms 33, the link 34 descending to be linked to the extremity of the limb 35A of arm 35 remote from shaft 31 to set a vertical gap between arms 33 and 35. Upper end 31 A of the shaft 31 is widened into a wider cylindrical diameter.

The extremities of arms 33 and 35B are roundly profiled to assist the horizontal introduction of an article into the vertical gap between them.

The lower end of the shaft 31 is enlarged at 36, to weight the grip part 30.

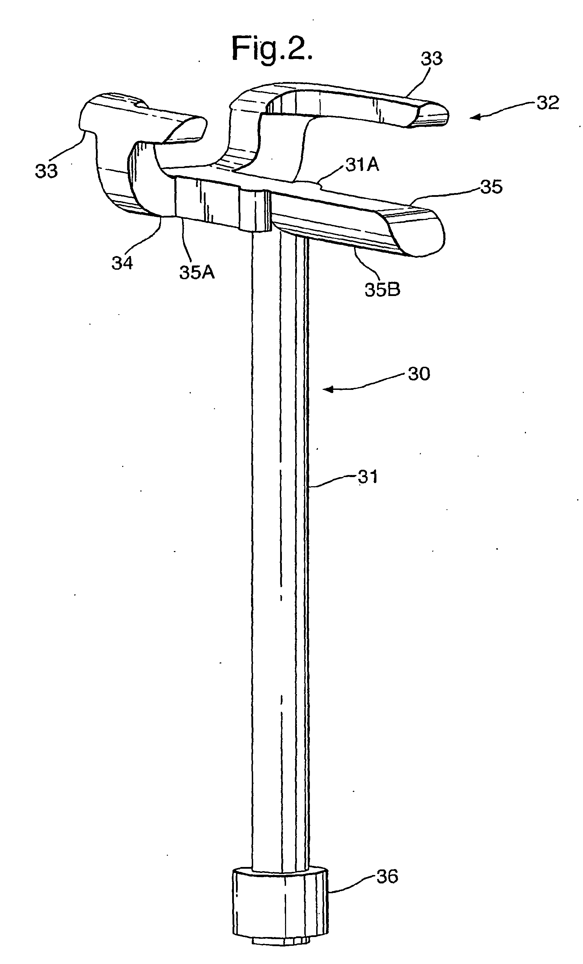

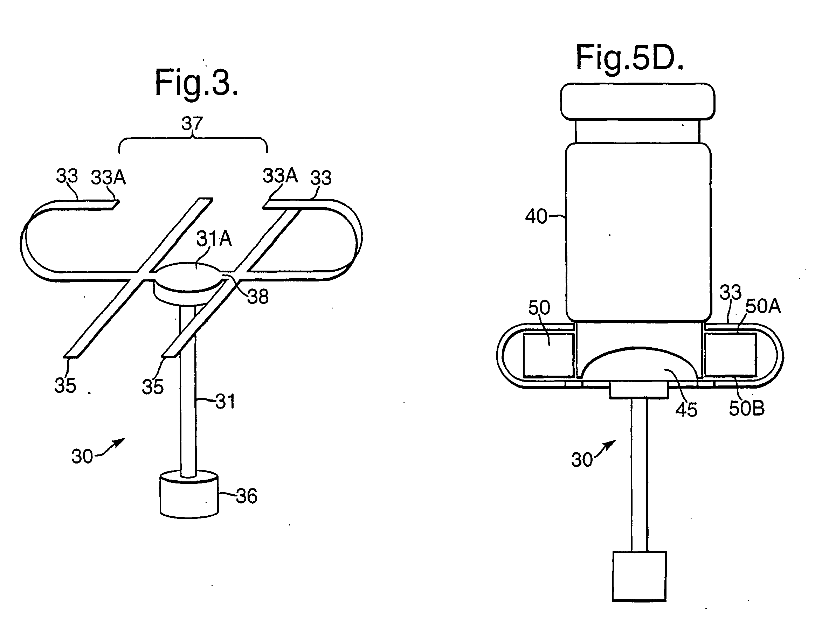

Referring to Fig. 3 an alternative construction of the grip part 30 is shown, parts corresponding to Fig. 2 being numbered correspondingly. In this embodiment two grip arms 33 extend in the transverse direction toward each other with their opposite ends 33A aligned toward each other and defining a gap 37 between them in which an article such as a vial may fit. The two arms 33 extend integrally from the shaft 31 and loop around toward each other to form a generally "C" shaped loop, the bite of the "C" facing upwardly and comprising the gap 37. As will be described in more detail later grip arms 33 are transverse to the direction of conveying motion. The grip part 30 of Fig. 3 also has two support arms 35 lower down on the grip part 30 than the grip arms 33 which can fit underneath an article held by the holding means 10 and support it whilst the grip part 10 is in its upper position. As shown in Fig. 3 the support arm is provided by the two support arms 35 with a linker 37, the combination of arms 35 and linker 38 being of a generally "H" shape as viewed downwardly in plan, the support arms being the uprights of the "H". The grip arms 33 integrally extend from the support arms 35.

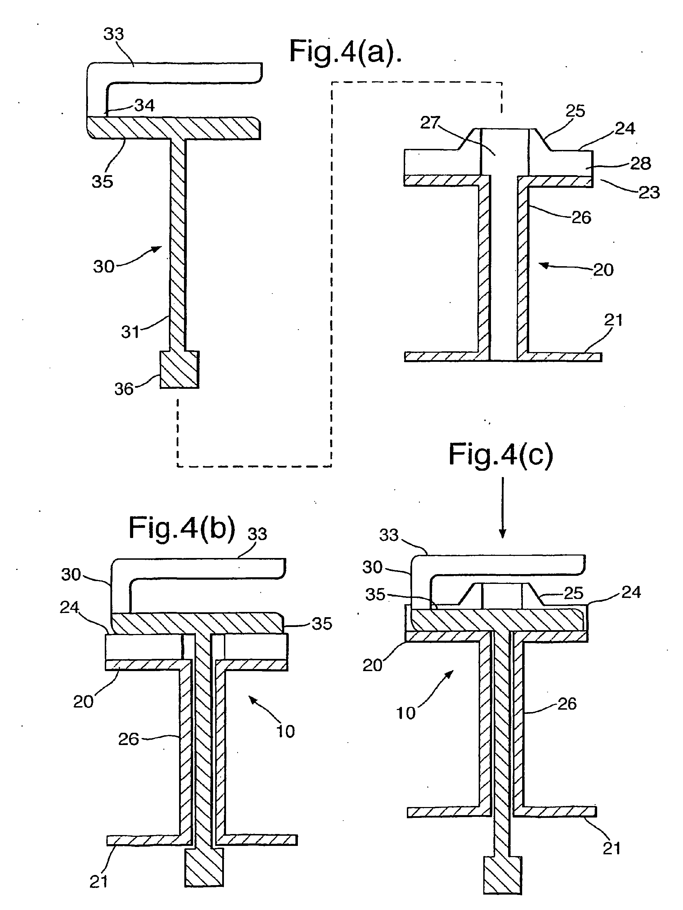

Figs 4A, 4B and 4C are vertical sections through the base 20 and grip part 30 cut along perpendicular planes, Fig. 4A showing the base 20 and grip part 30 separately, Fig. 4A showing the grip part 30 in its upper position, Fig. 4B in its lower position. As seen in Figs. 4A-C, the base 20 has an upwardly extending tubular guide 26 formed integrally with mounting plate 21 and rib 22, having upper and lower open ends, the upper end 27 being visible in Fig. 1. The shaft 31 of grip part 31 fits in a smooth sliding fit within guide 26, the enlarged lower end 36 of shaft 31 being removable, e.g. by a screw thread, to allow the shaft 31 to be inserted therein, and to be retained by the enlargement 36 when the enlargement 36 is re-fitted. The grip part 30 is slideably moveable relative to the base 20 between an upper position shown in Fig 4A, and a lower position as shown in Fig. 4B of the grip part 30.

When the grip part 30 is in its upper position as in Fig 4A, there is a vertical gap between the arms 33 and the upper part 24, 25 of the base 20. The grip part 30 may be held or supported in this position by ancillary means (not shown) such as an abutment part or ramp surface adjacent the lower end 36 of the shaft, and which the lower part 36 may contact e.g. during horizontal movement of he assembly 20 30 during operation of a conveyor system of which the holding means 20, 30 comprises a part.

The upper part 25 of the base 20 has a receiving cavity 28 in the form of a receiving slot extending across the flange 24 and the convex part 25, with its length direction perpendicular to the up-down axis. This receiving cavity 28 receives the support arm 35 when the grip part 30 is in its lower position, as can be seen in Fig. 4B. The shape of the receiving cavity 29 corresponds with that of the support arm 35, having a widened part to receive the cylindrically widened part 31A of the upper end of shaft 31. The depth of the receiving cavity 28 is greater than the thickness dimension of the support arm 35 so that when the support arm 35 is received in the cavity 28 the upper surface 35A of the support arm 35 is below the upper surface of the part 24 of the base 30, as seen in Fig. 4B.

In its upper position as seen in Fig. 4A the support arm 35 is received in an raised position in receiving cavity 28 i.e. occupying that part of the cavity 28 which cuts through the conical upper part 25, with its upper surface level with the top of the frustro-conical part 25. In its lower position as seen in Fig. 4B the support arm 35 is a lowered position with its upper surface below the level of the upper surface of flange 24.

The grip part 30 shown in Fig. 3 assembles analogously with the base 20.

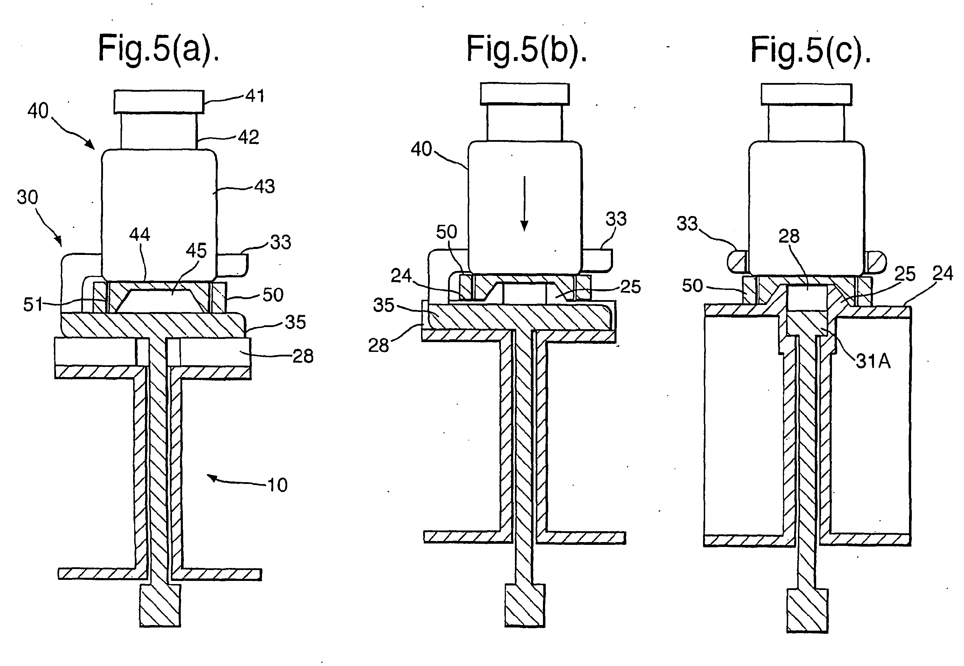

Figs. 5A, 5B and 5B shows more clearly the operation of the holding means 20, 30 in holding a vial 40.

Figs. 5A-C shows a typical pharmaceutical vial 40, having a closure 41, a neck 42, a cylindrical body 43, and a profiled bottom 44. Figs. 5A-C also show a carrier 50 for of the vial 40, comprising a ring of plastics material surrounding a central aperture in which the bottom 44 of the vial 40 sits and is securely held by a friction fit. The bottom 44 of the vial 40 is profiled externally in a downward facing concave frustro-conical shape 45. The flat surface 24 and convex part 25 are shaped to mate with the downward facing correspondingly shaped underside surface 45 of the vial and the carrier 50. In the vial shown in Fig. 5 the diameter of the ring-shaped stand 50 is preferably the same as the diameter of the upper closure 41 of the vial, facilitating the rolling of vials for labelling etc., the diameter of the stand 50 and closure 41 extending beyond the diameter of the body of the vial 40.

The carrier 50, with a vial 40 therein may be moved horizontally from right to left as drawn until the stand 50 abuts against the arms 33, into the position shown in Fig. 5A, with the grip part 30 in its upper position, corresponding to Fig. 3B, so that the vial 40 fits between the arms 33, the carrier 50 fits into the vertical gap between arms 33 and 35, lower rim 53 of the carrier 50 rests on the upper surface of the support arm 35 and the carrier 50 fits into the gap between arms 33 and the upper part 24, 25 of base 20. In this position the downward facing underside 45 of the vial 40 and of carrier 50 is above the part 24, 25 of the base 20. The above mentioned rounded ramped profiling of the extremities of the arms 33 and 35B facilitates the smooth horizontal movement of the carrier 50 between arms 33 and 35. Use of the grip means of Fig. 3 is analogous.

The grip part 30 is now moved into its lower position as seen in Fig. 5B corresponding to Fig 3C. This may be achieved simply by gravity, e.g. by removing any means (not shown) by which the grip part 30 is maintained in its upper position, so that the weight of the grip part 30 biases and pulls the part 30 downward. Alternatively the grip part 30 may be positively urged downwards by a mechanism (not shown).

When the grip part 30 is in the lower position as shown in Fig 5B with the vial 40 and carrier 50 in place, the arms 33 bear on the upper surface of the carrier 50, and the underside 45 of the vial 40 and carrier 50 mate with the upper part 25 of the base 20 so that the carrier 50 is held between the arms 33 and the upper part 25 of the base 20. The holding of the carrier 50 between the arms 33 and the upper part 25 of the base 20 in this way is shown in Fig.5B and 5C. The underside of the base 50 and the bottom 45 of the vial 40 mate securely with the upper parts 24 and 25 of the base 20.

When the support arm 35 is received in the cavity 28 the upper surface 35A of the support arm 35 is below the upper surface of the part 24 of the base 30, as seen in Figs 5B and 5C. This construction enables the grip part 30 to grip the carrier 50 between the grip arms 33 and the base 20, with the underside of the carrier 50 resting on the upper surface of the flange 24, the underside of the carrier 50 no longer resting on the arm 33.

A holding means having the grip part shown in Fig. 3 operates analogously to that of Figs. 5A-C, as shown in Fig. 5D. With the grip means 30 assembled with its base 20 and the grip means 30 in its upper position, a vial 40 mounted in its stand 50 is moved in the direction of the arrow shown in Fig. 3 into the gap 36 so that the upper surface 50A of stand 50 is positioned underneath the two grip arms 33, with the lower surface 50B of the stand 50 resting on the support arms 35. The grip means 30 is then moved downwardly into its lower position analogous to Figs. 4B and 4C, so that the part 31A of the grip means 30 recedes into receiving cavity 28 (being appropriately shaped to receive the part 31A of the grip part 30 of Fig. 3) so that the stand 50 is gripped between the base 20 and the grip arms 33, and the central convex portion 25 of the base 20 mates against the concave bottom 45 of vial 40. Raising the grip part 30 releases the vial 40 so it may be removed from the holding means, e.g. by another movement in the direction of the arrow.

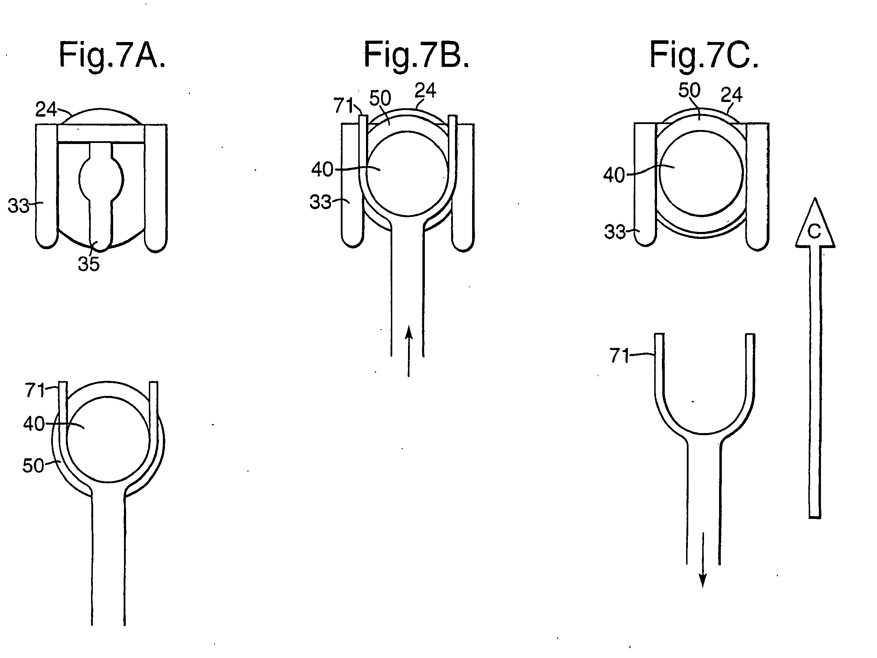

Referring to Figs. 6, 7 and 8, Figs. 6 and 8 show the overall arrangement of a conveyor system in a schematic side view. Fig. 7 shows a plan view of the loading system. The conveying direction is indicated by the arrow.

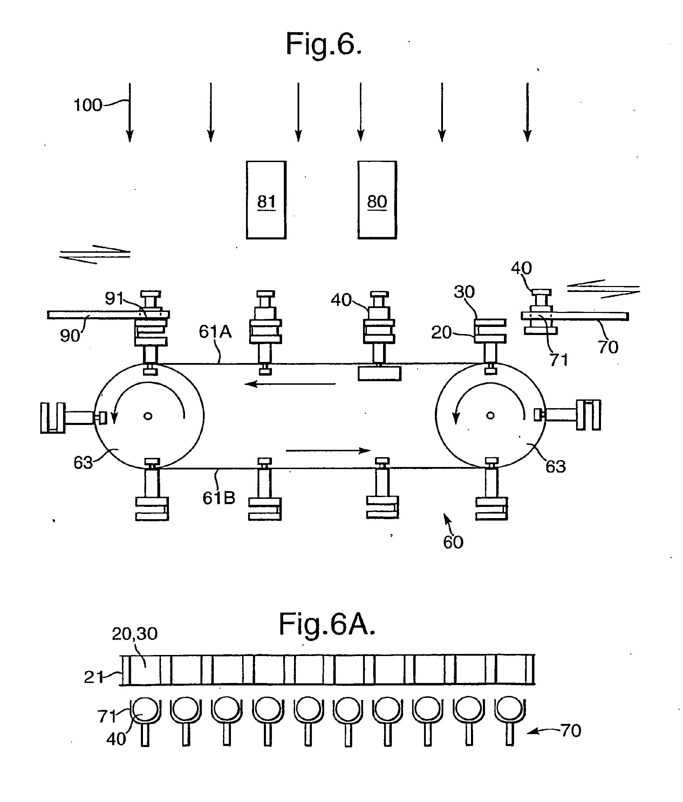

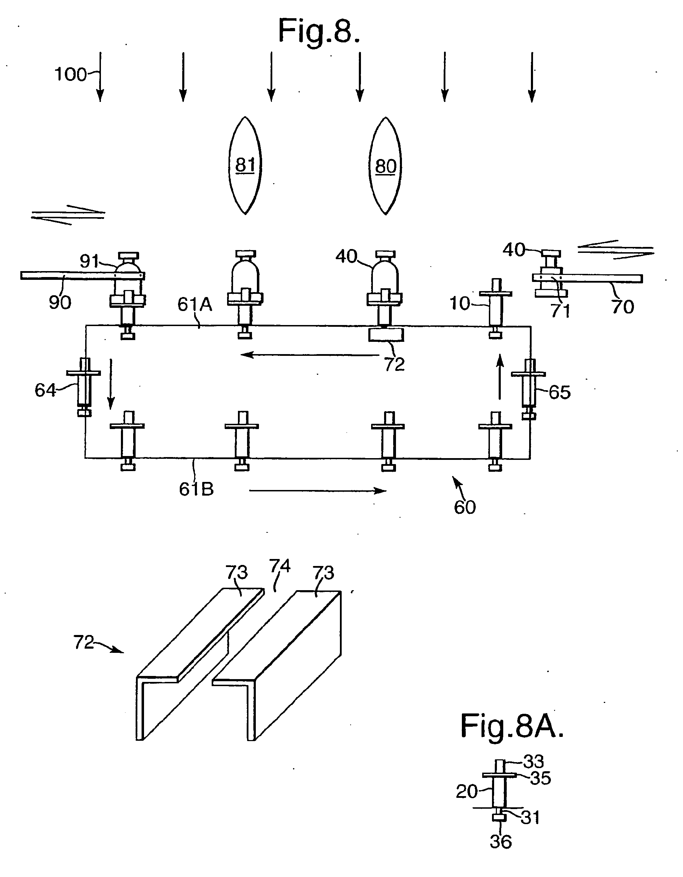

In Fig. 6 the holding means 10 are of the type shown in Figs. 2, 4 and 5A-C but it will be immediately understood that holding means of the type shown in Figs. 3 and 5D may equally well be used, having the advantage that vials 40 may be loaded and unloaded from the conveyor by a movement of the vial in the same direction, i.e. from right to left as seen in Figs. 6 and 8.

As seen in Figs. 6 and 8 the conveyor system 60 is of generally conventional construction, and comprises a pair (only one is part shown in Fig. 6) of continuous chains of links 61, pivotally connected together at ends 62 of the links 61, the chains being arranged to move in parallel. The chain of links 61 moves such that an upper section 61A of each chain of links 61 moves in the conveying direction shown by the arrow, whilst the opposite lower section 61B of each chain of links 61 moves in the opposite return direction. Fig. 8A shows more detail of the holding means and the vials.

As seen in Fig. 6 at each end the chain of links 61 is supported in a conventional manner by a guide wheel 63 (not shown in Fig. 6), mounted for rotation about a rotation axis perpendicular to the conveying direction. One or more guide wheel 62 may be motor driven to thereby drive the conveyor system in the directions referred to, and the chain of links 61 may be supported by other support means, e.g. support wheels etc. (not shown) in a generally conventional manner. As seen in Fig. 8 an alternative construction of conveyor 60 is shown with parts corresponding to Fig. 6 numbered correspondingly. However instead of the wheels 63 the conveyor of Fig. 8 has lift sections 64, 65 at each end to respectively lower the holding means 10 at the downstream end, and to raise them at the upstream end. Fig. 8 also shows the use of holding means 10 as shown in Figs. 3 and 5D. Fig. 8 also shows a part 72 being a means to restrain the grip part 30 from upward movement under an upward force of a needle, comprising two abutment parts 73 being the sides of a slot 74. During operation of the conveyor the shaft 31 of the grip part enters and slides along the slot 74. Under an upward force the enlarged part 36 of the shaft abuts against the sides 73 to restrain upward movement.

Plural holding means 20,30 are mounted on the conveyor 60 by means of their mounting plates 21, by a conventional mounting (not shown). Each holding means 20,30 is mounted so that its up-down direction extends perpendicular to the conveying direction of the upper part of the chain 60. The plural holding means 20,30 are arranged in plural rows perpendicularly across the conveying direction.

The grip means 33 of the grip part of each of the holding means 20,30 comprises a pair of grip arms forming a "U" shaped arrangement as described above, and as is seen in Fig. 6 the limbs 33 of each "U" and hence the open bite of the "U" point in the opposite direction to the conveying direction. Also the support arm 35 of each grip part 30, and hence the receiving slot 28 of each base 20, is aligned parallel to the conveying direction. The grip means shown in Fig. 3 may be used analogously, with the support arms 35 aligned in the conveying direction.

The conveyor system 60 also comprises a loader means 70 (generally) adjacent to the conveyor 60 and arranged to load articles, being vials 40 mounted in carriers 50, into the holding means 20,30. The loader means 70 is shown in more detail in Fig. 7. Fig. 7 shows a plan view of a single loader element 70, looking downwardly relative to Figs. 6 and 8, with the conveying direction indicated by a arrow "C". In the conveyors of Figs. 6 and 8 plural loader elements are used, one corresponding to each of the vials 40 making up the row across the conveyor 60. Fig. 6A shows in plan view the overal arrangement of the plural elements 70 across the row. In Fig. 7 the alignment of the row of vials 40 is left-right across the page.

The loader means 70 comprises a fork 71 with its jaws able to fit around and grip a vial 40. The bite of each set of jaws of fork 71 faces in the conveying direction. Each loader means 70 is reciprocally moveable in and opposite to the conveying direction either individually or together with all the loader means 70. Operation of the loader means 70 is shown sequentially in Figs. 7A-7C. In Fig. 7A a vial 40 is shown in plan view loosely gripped between the jaws of fork 71. For example the vials 40 may hang in the jaws of forks 71 with the underside of their closures 41 resting on the upper surface of forks 71. The conveyor means 60 is constructed so that as the holding means 20, 30 mounted thereon adopt a vertical configuration the grip part 30 is moved (e.g. by contact with a ramp surface (not shown)) into its upper position. The loader means 70 and conveyor 60 are configured so that immediately the holding means 20, 30 have adopted this vertical position the fork 71 carries the vial 40 in the conveying direction into a position relative to the holding means 20, 30 such that the underside of the vial 40 and carrier 50 is resting on the support arm 35 and is above the upper part of the base 20, the vial 40 is between the arms 33 i.e. in the bite of the "U" or in the gap 36 between the arms 33 of the grip means of Fig. 3, and the upper surface of the carrier 50 is below the grip arms 33.. This is shown in Fig. 7B. The movement of the loader means 70 in the conveying direction between the retracted position shown in Fig. 7A and the forward position shown in Fig. 7B is arranged to be such that there is zero relative velocity between the means 70 and the holding means 20,30 when the vial 40 and carrier 50 are in this position.

The grip part 30 can now move into its lower position to grip the article as described above.

The grip of the fork jaws 71 is sufficiently light that as the grip part 30 moves downward to grip the vial carrier 50 the vial 40 can move downward in the grip of the fork jaws 71. Alternatively the loader means 70 itself may be arranged to move downwardly whilst holding the vial 40, and/or to release the vial in another manner e.g. by a positive release of the grip. The holding means 20,30 and the loader means 70 are configured that the vial 40 is securely held by the holding means 20,30 by the time the loader means 70 reaches the forward limit of its movement, such that the relative motion in the conveying direction between the holding means 20,30 and the loader means 70 carries the vial 40 and carrier 50 out of the grip of the fork jaws 71 as shown in Fig. 7C. The fork 71 can simultaneously or subsequently move back in the direction opposite the conveying direction ready to receive another vial 40. Whilst this is happening the next row of empty holding means 20,30 are moving upward toward their vertical orientation to receive this new vial and carrier 50, and the movement of the loader means 70 into its retracted position moves the loader means 70 out of the path of the next row 20A,30A of holding means, rising as the wheel 63 rotates. Suitable means, e.g. a robot handling means, by which the loader means can be loaded with a new vial 40 and carrier 50 will be apparent to those skilled in the art. For example plural vials 40 and carriers 50 can be provided in a row transverse to the conveying direction, and corresponding to the spacing of the plural fork jaws 71 of the loading means 70, and can be moved into the path of the loading means 70 as it moves in the conveying direction so that each vial 40 intercepts the path of a fork 71 and is caught by the fork 71.

The conveyor system of Fig. 8 operates analogously, but in Fig. 8 the processing stations 80, 81 are shown provided with aerodynamic shrouds as described in more detail below.

In the course of their movement in the conveying direction the vials 40 are subjected to one or more process, such as filling, closing, sealing etc. applied by one or more processing stations 80, 81.

After the processes to be applied at stations 80, 81 to the vials 40 have been completed, the vials may be unloaded from the conveyor system by unloader means 90 positioned at a downstream end of the conveyor system. The unloader means may be a mechanism essentially a similar but opposite construction to the loader means 70. That is, vials 40 and carriers 50 may be carried by holding means 20,30, and the unloader means 90 may have fork jaws 91 similar to those 71 but with their bite facing opposite to the conveying direction positioned to receive vials carried by the holding means 20,30 whilst the vials 40 and carriers 40 are securely held by the holding means 20,30. The downstream end of the conveyor 60 may be constructed so that when vials 40 are caught in this way by such fork jaws 91 of the unloading means 90 and securely held thereby, the grip part 30 is moved into its upper position to release the vial 40 and carrier 50. The vials 40 and carriers 50 may then be carried by the jaws 91 of the unloader means 90 away from the vicinity of the conveyor 60 by a horizontal movement of the unloader means 90. Suitably the vials 40 are received by the unloader means 90 and removed from the holding means 20,30whilst the vials 40 are still moving horizontally and before the holding means 20,30 have begun their descent at the downstream end of the conveyor 60.

Thereafter vials held by the unloading means 90 may be delivered to a suitable receiving means, e.g. delivered to another conveyor (not shown) or to defined locations etc.

To maintain sterility of the vials 40 during their conveying along the conveyor 60 and the performance of the processes at stations 80, 81 a laminar flow 100 of purified air may be directed downwardly. It is seen in Fig. 6 that the vials 40 are held by their carriers 50 such that the vials are held adjacent their bottom 44 so that there is reduced risk of upward rebound of the airflow toward the upper part or closure 41 of the vials 40.

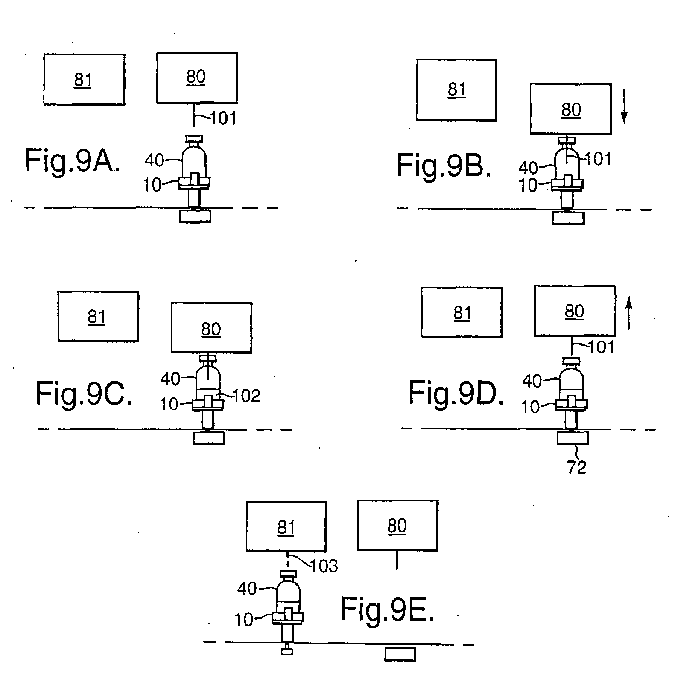

Figs. 9 A-E shows the sequence of operations as a vial 40 passes processing stations 80 and 81. As the vial 40 passes underneath station 80 as seen in Fig. 9A, the processing station 80 descends so that filling needle 101 punctures and pass through the puncturable closure 41 of the vial 40. As seen in Fig. 9B a liquid medicament 102 is injected through the needle 101 into the vial 40, air being vented around the sides of the needle 101 or via a vent groove in the outer surface of the needle 101. As seen in Fig. 9D the station 80 then rises, withdrawing the needle 101 but leaving a residual puncture hole (not shown) in closure 41. The vial 40 is then moved to be underneath station 81 at which the residual puncture hole is heat sealed using a focused laser beam 103 to melt the material of the closure adjacent to the residual puncture hole.

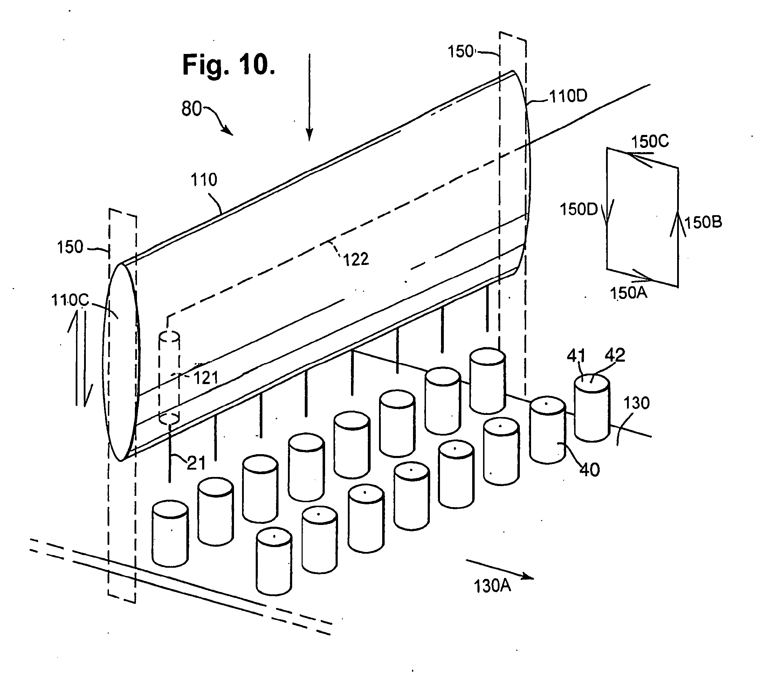

Fig. 10 shows the processing station 80, which may be a processing station 80 as described with reference to Figs 7, 8 and 9 above, with its shroud 110 and its associated units 120 (one only shown, hatched) in use. The shroud 110 together its their associated units 120 and preferably all other components to be enclosed within the shroud may be sterilised by autoclaving before the shroud is closed, to give an assurance of sterility. The shroud 110 is located above a conveyor line 130, which may be a conveyor line 60 as described above, transporting empty vials 40 (shown schematically). Each vial 40 is closed at its upwardly facing mouth by a puncturable closure 41. The conveyor line 130 is transporting the vials 40 in a conveyor direction shown by arrow 130A, and on the conveyor 130 plural vials 40 are arranged in holders (not shown) on the conveyor 130 in a row extending perpendicularly across the conveyor line 130, with the upper surface of their puncturable closures 41 facing upwards. A downward laminar flow of purified air is directed over the shroud 110 and conveyor 130 as indicated by the bold arrow.

In Fig. 10 each unit 120 is positioned directly above the closure 41 of a corresponding vial 40 beneath. The relative velocity of each unit 120 and vial 40 in the conveying direction is temporarily zero, which may be achieved by means known in the art. For example the conveyor 130 may be temporarily stopped, or alternatively the shroud 110 may be moved about a path shown schematically 150A-D over length 150A of which the shroud 110 and vials 40 have the same velocity and hence zero relative velocity.

The shroud 110 is supported at its ends 110C, 110D on opposite sides of the conveyor line 130 on supports shown schematically 150, and is moveable up and down thereon by a drive means (not shown) of conventional construction and operation. The supports 150 may incorporate suitable mechanisms to achieve such "walking" motion. With the conveyor line 130 and the shroud 110 temporarily at zero relative velocity the shroud 110 and its associated units 120 is moved downwards, e.g. along length 150D, so that needles 121 puncture the closures 41 of each of the vials 40. Adjacent one longitudinal end of the shroud 110 are located control equipment (not shown), and reservoirs of medicament and metering pumps for the medicament, (not shown) to which the flow conduits 123 to ensure that the shroud 110 and vials 40 are in an appropriate configuration for the filling operation to be carried out, and to meter an appropriate quantity of medicament into each vial 40. The vials 40 may then be filled with a suitable amount of a medicament via flow conduits 123, and the needles 121 may then be withdrawn by an upward movement of the shroud, e.g. along length 150B, from their respective vials 40, leaving only a small residual puncture hole 42 in closure 41. The inherent resilience of the elastomeric material of the closures 41 tends to keep the interior of the vial 40 sealed against contamination, but the closures 41 are then sealed using a further processing station comprising a sealing station (e.g. a station 81 as described with reference to Figs 7, 8, 9 above) which will be described below. The flow conduits 123 are connected to metering pumps (not shown) and reservoirs (not shown) for the liquid medicament, and preferably the construction is such that the length of each flow conduit 123 between the unit 120 and the pump is the same, to facilitate a uniform flow of the medicament.

Prior to the filling operation all of the components 110, 120, 130, 40, 150 have been thoroughly sterilised and during the filling operation the entire assembly of shroud 110 and its units 120, conveyor 130, vials 40 and supports 150 are maintained in a sterile enclosure (not shown) and under a downward flow of sterile air in the direction of the arrows. The smooth, aerodynamic profile of the outer surface of the shroud 110 ensures a smooth undisturbed flow of the sterilised air downwards, and the absence of recesses, corners etc therein inhibits the accumulation of any contaminating microorganisms.

## Claims

1. A conveyor system (60) for the transport of vials (40) having a closure (41) made of a heat-fusible material and an opposite bottom (44), provided with a processing station (80) to perform a process in which the vial with its closure (41) made of a heat- fusible puncturable material is punctured by passing a hollow filling needle through the closure (41), a material introduced into the vial (40) via the needle and the needle then withdrawn, provided with means to resist the upward force of withdrawing the filling needle, **characterised in that** said means comprise a means which holds the vial (40) adjacent to the bottom (44) of the vial (40).

2. A conveyor system (60) according to claim 1 **characterised in that** said means which holds the vial (40) adjacent to the bottom (44) of the vial (40) comprises a carrier (50) in which the lower part of the vial body (43) sits and having an upward facing surface (50A), and a holding means (10) which bears upon the upward facing surface (50A)of the carrier (50).

3. A conveyor system (60) according to claim 1 or 2 **characterised in that** the holding means (10) comprises;
a base (20) suitable for a downward facing surface (50B) of a vial (40) or a combination of a vial (40) carried in a carrier (50) to sit upon;
a grip part (30) positioned relatively upwardly of the base (20) and suitable to bear on an upward facing surface of the vial (40) or combination (40,50);
the base (20) and/or grip part (30) being moveable so that the carrier (50) may be positioned between the base (20) and the grip part (30), and the base (20) and grip part (30) may then be brought closer together to grip the vial (40) or combination (40,50) between the base (20) and the grip part (30), and subsequently moved further apart to release the vial (40) or combination (40,50).

4. A conveyor system (60) holding means (10) according to claim 3 **characterised by** a holding means (10) which comprises;
a base (20) having an upper part able to mate against a downward facing surface (50B) of a carrier (50),
and a grip part (30) having a grip means (32) able to mate against an upward facing surface (50A) of the carrier (50), the grip part (30) being moveable relative to the base (20) between upper and lower positions of the grip part (30), such that when the grip part-(30) is in its upper position there is a gap between the grip means (32) and the upper part of the base (20) into which gap at least part of the carrier (50) may be placed, and when the grip part (30) is in the lower position the grip means (32) bears on the carrier (50) and the downward facing surface (50B) of the article mates with the upper part of the base (20) so that the carrier (50) is held between the grip means (32) and the base (20).

5. A conveyor system (60) according to claim 2, 3 or 4 **characterised in that** the grip part (30) comprises an up-down extending shaft (31) having a grip means (32) adjacent the upper end of the shaft (31).

6. A conveyor system (60) according to claim 5 **characterised in that** the grip means (32) comprises a grip arm (33) connected with the shaft (31) and extending in a direction transverse to the shaft (31) up-down direction, the grip arm (33) being able to bear upon the carrier (50).

7. A conveyor system (60) according to claim 6 **characterised in that** the grip means (32) comprises two grip arms (33), between which the vial (40) or vial (40) carried in a carrier (50) may fit, with both arms (33) extending in the transverse direction.

8. A conveyor system (60) according to claim 6 or 7 **characterised in that** the grip part (30) also comprises a support (35) for the combination of vial (40) and carrier (50) which can fit underneath the vial (40) or combination (40,50) and support it whilst the grip part (30) is in its upper position.

9. A conveyor system (60) according to claim 8 **characterised in that** the support (35) comprises one or more support arm (35) that extends transverse to the up-down direction of the shaft (31) to a remote end of the support arm (35).

10. A conveyor system (60) according to any one of claims 2 to 9 **characterised in that** the base (20) includes a guide (26) to support and guide the grip part (30) in its upward and downward movement between upper and lower positions.

11. A conveyor system (60) according to any one of the preceding claims **characterised in that** the grip part (30) is biased toward its lower position.

12. A conveyor system (60) according to any one of claims 8 to 11 **characterised in that** the base (20) has a receiving cavity (28) for the support (35), and into which the support (35) may be received when the grip part (30) is in its lower position.

13. A conveyor system (60) according to claim 12 **characterised in that** the up-down depth dimension of the receiving cavity (28) is greater than the up-down thickness dimension of the support (35) so that when the support (35) is received in the receiving cavity (28) with the grip part (30) in its lower position the upper surface of the support (35) is below the upper surface of the upper part of the base (20).

14. A conveyor system (60) according to any one of claims 2 to 13 **characterised by** a loader means (70) adjacent to the conveyor (60) and arranged to carry a combination of vial (40) and carrier (50) into a position relative to the holding means (10) when the grip means (32) is in its upper position, such that the downward facing surface (50B) of the vial (40) or combination (40,50) is above the upper part of the base (20) and the upward facing surface (50A) of the vial (40) or combination (40,50) is below the grip means (32).

15. A conveyor system (60) according to claim 14 **characterised by** an unloader means (90) adjacent to the conveyor (60) and arranged to unload vials (40) or combinations of vials (40) and carriers (50) from the holding means (10), being configured to receive a vial (40) or a combination of vial (40) and carrier (50) gripped by the holding means (10), prior to movement of the grip part (30) into its upward position to release the vial (40) or combination of vial (40) and carrier (50) from the holding means (10).

16. A conveyor system (60) according to any one of claims 4 to 15 **characterised by** a processing station (80) to perform a process in which a puncture hole in a vial closure (41) made of a heat- fusible puncturable material is sealed using a source of heat.

17. A conveyor system (60) according to any one of the preceding claims **characterised by** a means to direct a downwardly moving flow of purified air (100) toward the closure (41), and the means which holds the vial (40) adjacent to the bottom (44) of the vial (40) holds the vial (40) at a position which is downstream relative to the closure (41) in the downwardly moving flow of purified air (100).

18. A conveyor system (60) according to any one of the preceding claims **characterised by** a means to direct a laminar upstream to downstream direction flow of purified air (100) over vials (40) on the conveyor system (60), and by a processing station (80) for performing an operation on a vial (40) in [a] the laminar flow of purified air (100) which comprises a processing apparatus (120) for performing the operation upon the vial (40),
and an aerodynamic shroud (110) around at least part of the apparatus (120) and positioned such that a leading surface of the aerodynamic shroud (110) is upstream of the apparatus (120).

19. A process in which a vial (40) with a closure (41) made of a heat- fusible puncturable material is conveyed to a position adjacent a processing station (80) which punctures the vial (40) closure (41) by passing a hollow filling needle through the closure (41), introduces a material into the vial (40) via the needle, and withdraws the needle, or adjacent a processing station (81) which performs a process in which a puncture hole in a vial closure (41) made of a heat- fusible puncturable material is sealed using a source of heat, wherein the vial (40) is conveyed adjacent the processing station (80) using a conveyor system (60) as claimed in any one of claims 1 to 18.

## Patentansprüche

1. Fördersystem (60) für den Transport von Fläschchen (40) mit einem Verschluss (41), der aus einem wärmeverschweißbaren Material hergestellt ist, und einem gegenüberliegenden Unterteil (44), das mit einer Verarbeitungsstation (80) versehen ist, um ein Verfahren durchzuführen, in dem das Fläschchen mit seinem Verschluss (41), der aus einem wärmeverschweißbaren, durchstechbaren Material hergestellt ist, durch ein Durchgehen einer hohlen Füllnadel durch den Verschluss (41), durchstochen wird, wobei ein Material in das Fläschchen (40) über die Nadel eingeführt wird und die Nadel dann zurückgezogen wird, wobei es mit einer Einrichtung versehen ist, um der nach oben gerichteten Kraft des Zurückziehens der Füllnadel Widerstand entgegenzusetzen, **dadurch gekennzeichnet, dass** die Einrichtung eine Einrichtung umfasst, welche das Fläschchen (40) angrenzend an das Unterteil (44) des Fläschchens (40) hält.

2. Fördersystem (60) nach Anspruch 1, **dadurch gekennzeichnet, dass** die Einrichtung, welche das Fläschchen (40) angrenzend an das Unterteil (44) des Fläschchens (40) hält, einen Träger (50) umfasst, in dem der untere Teil des Fläschchenkörpers (43) sitzt und der eine nach oben gewandte Oberfläche (50A) aufweist, und eine Halteeinrichtung (10), die auf der nach oben gewandten Oberfläche (50A) des Trägers (50) lastet.

3. Fördersystem (60) nach Anspruch 1 oder 2, **dadurch gekennzeichnet, dass** die Halteeinrichtung (10) umfasst:
eine Basis (20), die dafür geeignet ist, dass eine nach unten gewandte Oberfläche (50B) von einem Fläschchen (40) oder eine Kombination von einem in einem Träger (50) getragenen Fläschchen (40), darauf sitzt;
einen Greifteil (30), der relativ aufwärts zu der Basis (20) positioniert ist und geeignet ist, auf einer nach oben gewandten Oberfläche des Fläschchens (40) oder der Kombination (40, 50) zu lasten;
wobei die Basis (20) und/oder der Greifteil (30) bewegbar sind, so dass der Träger (50) zwischen der Basis (20) und dem Greifteil (30) positioniert werden kann, und wobei die Basis (20) und der Greifteil (30) dann näher zusammen gebracht werden können, um das Fläschchen (40) oder die Kombination (40, 50) zwischen der Basis (20) und dem Greifteil (30) zu greifen, und nachfolgend weiter auseinander bewegt, um das Fläschchen (40) oder die Kombination (40, 50) freizugeben.

4. Fördersystem (60) nach Anspruch 3, **gekennzeichnet durch** eine Halteeinrichtung (10), welche umfasst:
eine Basis (20) mit einem oberen Teil, der in der Lage ist gegen eine nach unten gewandte Oberfläche (50B) eines Trägers (50) zu passen,
und einen Greifteil (30) mit einer Greifeinrichtung (32), die in der Lage ist, gegen eine nach oben gewandte Oberfläche (50A) des Trägers (50) zu passen, wobei der Greifteil (30) derart relativ zu der Basis (20) zwischen oberen und unteren Positionen des Greifteils (30) bewegbar ist, dass, wenn der Greifteil (30) in seiner oberen Position ist, es einen Zwischenraum zwischen der Greifeinrichtung (32) und dem oberen Teil der Basis (20) gibt, wobei in den Zwischenraum zumindest ein Teil des Trägers (50) platziert werden kann, und wenn der Greifteil (30) in der unteren Position ist, die Greifeinrichtung (32) auf dem Träger (50) lastet und die nach unten gewandte Oberfläche (50B) des Artikels mit dem oberen Teil der Basis (20) zusammenpasst, so dass der Träger (50) zwischen der Greifeinrichtung (32) und der Basis (20) gehalten wird.

5. Fördersystem (60) nach Anspruch 2, 3 oder 4, **dadurch gekennzeichnet, dass** der Greifteil (30) eine sich hoch/runter erstreckende Welle (31) umfasst, mit einer Greifeinrichtung (32) angrenzend an das obere Ende der Welle (31).

6. Fördersystem (60) nach Anspruch 5, **dadurch gekennzeichnet, dass** die Greifeinrichtung (32) einen Greifarm (33) umfasst, der mit der Welle (31) verbunden ist und sich in eine Richtung erstreckt, die transversal zu der hoch/runter-Richtung der Welle (31) ist, wobei der Greifarm (33) in der Lage ist, auf dem Träger (50) zu lasten.

7. Fördersystem (60) nach Anspruch 6, **dadurch gekennzeichnet, dass** die Greifeinrichtung (32) zwei Greifarme (33) umfasst, zwischen denen das Fläschchen (40) oder in einem Träger (50) getragene Fläschchen (40) angebracht werden kann, wobei sich beide Arme (33) in die transversale Richtung erstrecken.

8. Fördersystem (60) nach Anspruch 6 oder 7, **dadurch gekennzeichnet, dass** der Greifteil (30) auch eine Stütze (35) für die Kombination von Fläschchen (40) und Träger (50) umfasst, welche unterhalb des Fläschchens (40) oder der Kombination (40, 50) angebracht werden kann und es/sie stützt, während der Greifteil (30) in seiner oberen Position ist.

9. Fördersystem (60) nach Anspruch 8, **dadurch gekennzeichnet, dass** die Stütze (35) einen oder mehrere Stützarme (35) umfasst, der sich transversal zu der hoch/runter-Richtung der Welle (31) erstreckt, zu einem entfernten Ende des Stützarms (35) .

10. Fördersystem (60) nach einem der Ansprüche 2 bis 9, **dadurch gekennzeichnet, dass** die Basis (20) eine Führung (26) umfasst, um den Greifteil (30) in seiner nach oben und nach unten gerichteten Bewegung zwischen oberen und unteren Positionen zu stützen und zu führen.

11. Fördersystem (60) nach einem der vorhergehenden Ansprüche, **dadurch gekennzeichnet, dass** der Greifteil (30) zu seiner unteren Position vorgespannt ist.

12. Fördersystem (60) nach einem der Ansprüche 8 bis 11, **dadurch gekennzeichnet, dass** die Basis (20) einen Aufnahmehohlraum (28) für die Stütze (35) aufweist, und in dem die Stütze (35) aufgenommen werden kann, wenn der Greifteil (30) in seiner unteren Position ist.

13. Fördersystem (60) nach Anspruch 12, **dadurch gekennzeichnet, dass** die hoch/runter-Tiefenabmessung des Aufnahmehohlraums (28) größer als die hoch/runter-Dickenabmessung der Stütze (35) ist, so dass, wenn die Stütze (35) in dem Aufnahmehohlraum (28) mit dem Greifteil (30) in seiner unteren Position aufgenommen ist, die obere Oberfläche der Stütze (35) unterhalb der oberen Oberfläche des oberen Teils der Basis (20) ist.

14. Fördersystem (60) nach einem der Ansprüche 2 bis 13, **gekennzeichnet durch** eine Ladeeinrichtung (70) angrenzend an den Förderer (60) und angeordnet, um eine Kombination von Fläschchen (40) und Träger (50) in eine Position relativ zu der Halteeinrichtung (10) zu tragen, wenn die Greifeinrichtung (32) in ihrer oberen Position ist, derart, dass die nach unten gewandte Oberfläche (50B) des Fläschchens (40) oder Kombination (40, 50) über dem oberen Teil der Basis (20) ist, und die nach oben gewandte Oberfläche (50A) des Fläschchens (40) oder Kombination (40, 50) unter der Greifeinrichtung (32) ist.

15. Fördersystem (60) nach Anspruch 14, **gekennzeichnet durch** eine Entladeeinrichtung (90) angrenzend an den Förderer (60) und angeordnet, um Fläschchen (40) oder Kombinationen von Fläschchen (40) und Trägern (50) von der Halteeinrichtung (10) zu entladen, wobei sie ausgestaltet ist, um ein Fläschchen (40) oder eine Kombination von Fläschchen (40) und Träger (50), **durch** die Halteeinrichtung (10) gegriffen, zu empfangen, vor einer Bewegung des Greifteils (30) in seine Aufwärtsposition, um das Fläschchen (40) oder die Kombination von Fläschchen (40) und Träger (50) von der Halteeinrichtung (10) freizugeben.

16. Fördersystem (60) nach einem der Ansprüche 4 bis 15, **gekennzeichnet durch** eine Verarbeitungsstation (80), um ein Verfahren durchzuführen, in dem ein Durchstechloch in einem Fläschchenverschluss (41), der aus einem wärmeverschweißbaren, durchstechbaren Material hergestellt ist, unter Verwendung einer Wärmequelle abgedichtet wird.

17. Fördersystem (60) nach einem der vorhergehenden Ansprüche, **gekennzeichnet durch** eine Einrichtung, um einen sich nach unten bewegenden Strom von gereinigter Luft (100) zu dem Verschluss (41) zu lenken, und wobei die Einrichtung, die das Fläschchen (40) angrenzend an das Unterteil (44) des Fläschchens (40) hält, das Fläschchen (40) an einer Position hält, die stromabwärts relativ zu dem Verschluss (41) in dem sich nach unten bewegenden Strom von gereinigter Luft (100) ist.

18. Fördersystem (60) nach einem der vorhergehenden Ansprüche, **gekennzeichnet durch** eine Einrichtung, um einen laminaren Strom von gereinigter Luft (100) in stromaufwärtiger nach stromabwärtiger Richtung über Fläschchen (40) auf dem Fördersystem (60) zu leiten, und **durch** eine Verarbeitungsstation (80) zum Durchführen einer Tätigkeit an einem Fläschchen (40) in dem laminaren Strom von gereinigter Luft (100), welche eine Verarbeitungsvorrichtung (120) zum Durchführen der Tätigkeit an dem Fläschchen (40) umfasst,
und eine aerodynamische Ummantelung (110) um zumindest einen Teil der Vorrichtung (120) herum und die derart positioniert ist, dass eine vordere Oberfläche der aerodynamischen Ummantelung (110) stromaufwärts der Vorrichtung (120) ist.

19. Verfahren, in dem ein Fläschchen (40) mit einem Verschluss (41), der aus einem wärmeverschweißbaren, durchstechbaren Material hergestellt ist, an Position gefördert wird, die an eine Verarbeitungsstation (80) angrenzt, welche durch ein Durchgehen einer hohlen Füllnadel durch den Verschluss (41), den Verschluss (41) des Fläschchens (40) durchsticht, ein Material in das Fläschchen (40) über die Nadel eingeführt und die Nadel zurückzieht, oder an eine Verarbeitungsstation (81) angrenzt, welche ein Verfahren durchführt, in dem ein Durchstechloch in einem Fläschchenverschluss (41), der aus einem wärmeverschweißbaren, durchstechbaren Material hergestellt ist, unter Verwendung einer Wärmequelle abgedichtet wird, wobei das Fläschchen (40) unter Verwendung eines Fördersystems (60), wie in einem der Ansprüche 1 bis 18 beansprucht, angrenzend an die Verarbeitungsstation (80) gefördert wird.

## Revendications

1. Système de transport (60) destiné au transport de flacons (40) comportant une fermeture (41) fabriquée dans un matériau thermocollant et un fond opposé (44), muni d'une station de traitement (80) destinée à réaliser un processus dans lequel le flacon muni de sa fermeture (41) fabriquée dans un matériau thermocollant pouvant être percé est percé en faisant passer une aiguille de remplissage creuse à travers la fermeture (41), un matériau est introduit dans le flacon (40) via l'aiguille puis l'aiguille est retirée, muni de moyens de résistance à la force verticale de retrait de l'aiguille de remplissage, **caractérisé en ce que** lesdits moyens comprennent un moyen qui retient le flacon (40) adjacent au fond (44) du flacon (40).

2. Système de transport (60) selon la revendication 1, **caractérisé en ce que** ledit moyen qui retient le flacon (40) adjacent au fond (44) du flacon (40) comprend un support (50) dans lequel la partie inférieure du corps du flacon (43) est posée et comportant une surface orientée vers le haut (50A) et un moyen de retenue (10) qui s'appuie contre la surface orientée vers le haut (50A) du support (50).

3. Système de transport (60) selon la revendication 1 ou 2, **caractérisé en ce que** le moyen de retenue (10) comprend :
une base (20) adaptée à une surface orientée vers le bas (50B) d'un flacon (40) ou d'un assemblage d'un flacon (40) placé dans un support (50) qui est posé dessus ;
une partie préhensile (30) positionnée en haut relativement à la base (20) et adaptée pour s'appuyer contre une surface orientée vers le haut du flacon (40) ou d'un assemblage (40, 50) ;
la base (20) et/ou la partie préhensile (30) étant mobiles de telle sorte que le support (50) puisse être positionné entre la base (20) et la partie préhensile (30), et que la base (20) et la partie préhensile (30) puissent ensuite être rapprochées pour saisir le flacon (40) ou l'assemblage (40, 50) entre la base (20) et la partie préhensile (30), puis éloignées pour libérer le flacon (40) ou l'assemblage (40, 50).

4. Système de transport (60) comportant un moyen de retenue (10) selon la revendication 3, **caractérisé par** un moyen de retenue (10) qui comprend :
une base (20) comportant une partie supérieure capable de correspondre à une surface orientée vers le bas (50B) d'un support (50) ;
et une partie préhensile (30) dotée d'un moyen préhensile (32) capable de correspondre à une surface orientée vers le haut (50A) du support (50), la partie préhensile (30) étant mobile par rapport à la base (20) entre des positions supérieure et inférieure de la partie préhensile (30), de telle sorte que lorsque la partie préhensile (30) est dans sa position supérieure, il y ait un espace entre le moyen de saisie (32) et la partie supérieure de la base (20), espace dans lequel au moins une partie du support (50) peut être placée, et lorsque la partie préhensile (30) est dans la position inférieure, le moyen de saisie (32) repose contre le support (50) et la surface orientée vers le bas (50B) de l'article correspond à la partie supérieure de la base (20) de façon que le support (50) soit maintenu entre le moyen de saisie (32) et la base (20) .

5. Système de transport (60) selon la revendication 2, 3 ou 4, **caractérisé en ce que** la partie préhensile (30) comprend une tige qui s'étend verticalement (31) comportant un moyen de saisie (32) adjacent à l'extrémité supérieure de la tige (31).

6. Système de transport (60) selon la revendication 5, **caractérisé en ce que** le moyen de saisie (32) comprend un bras de préhension (33) raccordé à la tige (31) et s'étendant dans une direction transversale à la direction verticale de la tige (31), le bras de préhension (33) étant capable de s'appuyer contre le support (50).

7. Système de transport (60) selon la revendication 6, **caractérisé en ce que** le moyen de saisie (32) comprend deux bras de préhension (33), entre lesquels le flacon (40), ou le flacon (40) disposé dans un support (50), peut s'ajuster, les deux bras (33) s'étendant dans la direction transversale.

8. Système de transport (60) selon la revendication 6 ou 7, **caractérisé en ce que** la partie préhensile (30) comprend également un support (35) pour l'assemblage du flacon (40) et du support (50) qui peut s'ajuster sous le flacon (40) ou l'assemblage (40, 50) et le supporter pendant que la partie préhensile (30) est dans sa position supérieure.

9. Système de transport (60) selon la revendication 8, **caractérisé en ce que** le support (35) comprend un ou plusieurs bras de support (35) qui s'étendent transversalement à la direction verticale de la tige (31) vers une extrémité éloignée du/des bras de support (35).

10. Système de transport (60) selon l'une quelconque des revendications 2 à 9, **caractérisé en ce que** la base (20) comprend un guide (26) destiné à supporter et guider la partie préhensile (30) dans son mouvement de va-et-vient entre les positions supérieure et inférieure.

11. Système de transport (60) selon l'une quelconque des revendications précédentes, **caractérisé en ce que** la partie préhensile (30) est précontrainte vers sa position inférieure.

12. Système de transport (60) selon l'une quelconque des revendications 8 à 11, **caractérisé en ce que** la base (20) possède une cavité de réception (28) pour le support (35), et dans laquelle le support (35) peut être reçu lorsque la partie préhensile (30) est dans sa position inférieure.

13. Système de transport (60) selon la revendication 12, **caractérisé en ce que** la dimension de profondeur verticale de la cavité de réception (28) est supérieure à la dimension d'épaisseur verticale du support (35) de façon que lorsque le support (35) est posé dans la cavité de réception (28) avec la partie préhensile (30) dans sa position inférieure, la surface supérieure du support (35) soit sous la surface supérieure de la partie supérieure de la base (20).

14. Système de transport (60) selon l'une quelconque des revendications 2 à 13, **caractérisé par** un moyen de chargement (70) adjacent au convoyeur (60) et agencé pour porter un assemblage du flacon (40) et du support (50) dans une position par rapport au moyen de retenue (10) lorsque le moyen de saisie (32) est dans sa position supérieure, de façon que la surface orientée vers le bas (50B) du flacon (40) ou de l'assemblage (40, 50) soit au-dessus de la partie supérieure de la base (20) et que la surface orientée vers le haut (50A) du flacon (40) ou de l'assemblage (40, 50) soit sous le moyen de saisie (32).

15. Système de transport (60) selon la revendication 14, **caractérisé par** un moyen de déchargement (90) adjacent au convoyeur (60) et agencé pour décharger les flacons (40) ou les assemblages de flacons (40) et de supports (50) du moyen de retenue (10), configuré pour recevoir un flacon (40) ou un assemblage d'un flacon (40) et d'un support (50) saisis par le moyen de retenue (10), avant le déplacement de la partie préhensile (30) dans sa position supérieure pour libérer le flacon (40) ou l'assemblage du flacon (40) et du support (50) du moyen de retenue (10).

16. Système de transport (60) selon l'une quelconque des revendications 4 à 15, **caractérisé par** une station de traitement (80) destinée à exécuter un processus dans lequel un trou percé dans une fermeture de flacon (41) fabriquée dans un matériau thermocollant pouvant être percé est scellé en utilisant une source de chaleur.

17. Système de transport (60) selon l'une quelconque des revendications précédentes, **caractérisé par** un moyen destiné à diriger un flux d'air purifié allant vers le bas (100) vers la fermeture (41), et le moyen qui maintient le flacon (40) adjacent au fond (44) du flacon maintient le flacon (40) dans une position qui est en aval par rapport à la fermeture (41) dans le flux d'air purifié allant vers le bas (100).

18. Système de transport (60) selon l'une quelconque des revendications précédentes, **caractérisé par** un moyen destiné à diriger un flux laminaire d'air purifié d'amont en aval (100) par-dessus les flacons (40) sur le système de transport (60) et par une station de traitement (80) destinée à réaliser une opération sur un flacon (40) dans l'écoulement laminaire d'air purifié (100) qui comprend un appareil de traitement (120) destiné à réaliser l'opération sur le flacon (40),
et une flasque aérodynamique (110) autour d'au moins une partie de l'appareil (120) et positionné de façon qu'une surface avant de la flasque aérodynamique (110) soit en amont de l'appareil (120).

19. Procédé selon lequel un flacon (40) muni d'une fermeture (41) fabriquée dans un matériau thermocollant pouvant être percé est transporté vers une position adjacente à une station de traitement (80) qui perce la fermeture (41) du flacon (40) en faisant passer une aiguille de remplissage creuse à travers la fermeture (41), introduisant ainsi un matériau dans le flacon (41), et retire l'aiguille, ou adjacente à une station de traitement (81) qui exécute un processus dans lequel un trou percé dans une fermeture de flacon (41) fabriquée dans un matériau thermocollant pouvant être percé est scellé en utilisant une source de chaleur, dans lequel le flacon (40) est transporté de manière adjacente à la station de traitement (80) en utilisant un système de transport (60) selon l'une quelconque des revendications 1 à 18.
